# EUROPÄISCHE PATENTSCHRIFT

(11) **EP 2 824 525 B1**
(45) Veröffentlichungstag und Bekanntmachung des Hinweises auf die Patenterteilung: **30.08.2017**
(21) Anmeldenummer: 13175550.6
(22) Anmeldetag: 08.07.2013
(51) Int. Cl.: G05B 19/418, G05B 19/409, G05B 23/02, G05B 19/042, G01C 11/00

(54) **Verfahren und Einrichtung zur Bestimmung der Position von Betriebsmitteln einer industriellen Automatisierungsanordnung**
Method and device for determining the position of resources of an industrial automation assembly
Procédé et dispositif de détermination de la position de moyens de fonctionnement d'une installation d'automatisation industrielle

(43) Veröffentlichungstag der Anmeldung: 14.01.2015
(73) Patentinhaber: Siemens Aktiengesellschaft, 80333 München (DE)
(72) Erfinder: Drumm, Oliver, 76344 Eggenstein-Leopoldshafen (DE); Haus, Christina, 50996 Köln (DE); Lutz, Benjamin, 76327 Pfinztal (DE); Wolf, Gerrit, 76227 Karlsruhe (DE)

(56) Entgegenhaltungen:
- EP-A1- 2 535 781
- EP-A2- 0 841 535
- DE-A1- 10 102 205
- DE-A1-102007 004 341

## Beschreibung

Die Erfindung betrifft ein Verfahren zur Bestimmung der Position von Betriebsmitteln einer industriellen Automatisierungsanordnung gemäß dem Oberbegriff des Patentanspruchs 1, und eine Einrichtung zur Durchführung des Verfahrens gemäß dem Oberbegriff des Patentanspruchs 5.

Industrielle Automatisierungsanordnungen, insbesondere verfahrenstechnische Anlagen, die beispielsweise in der chemischen Industrie, in der Lebensmittelindustrie, Pharmazeutik, Petrochemie und dgl. eingesetzt werden, sind oft weit verzweigt und umfassen eine Vielzahl von Betriebsmitteln. Diese sind dabei Bauteile und Baugruppen, die für die Funktionalität wesentlich sind, beispielsweise Rohre, Leitungen, Pumpen, Behälter und dgl. Oft werden solche Automatisierungsanordnungen bzw. verfahrenstechnische Anlagen über mehrere Jahrzehnte betrieben, wobei die Anlagen fortwährend gewartet, umgebaut, geändert und modernisiert werden, so dass sich die Betriebsmittel und deren Lage ständig ändern. Es ist dabei eine Herausforderung, die Planungsunterlagen mit dem tatsächlichen Ausbau der Anlage in Übereinstimmung zu halten. Zu vielen, insbesondere zu älteren Anlagen existieren lediglich Diagramme ("RI-Diagramme"), die das funktionale Verhalten der Anlage beschreiben. Eine dreidimensionale, insbesondere elektronische "Sicht" auf die Anlage, die beispielsweise jede Rohrwindung, Verbindung und dgl. enthält, existiert meist nicht.

Jedes Betriebsmittel bzw. Komponente (z.B. Ventil, Behälter, Messstelle) in einer Anlage ist insbesondere für Wartungszwecke durch ein eindeutiges Kennzeichen markiert. Dieses sog. "Anlagenkennzeichen" (AKZ) korrespondiert idealer Weise mit den Angaben des geschilderten "RI-Diagramms". Tritt beispielsweise in einer Anlage ein Fehler auf, so muss das verursachende Betriebsmittel möglichst schnell lokalisiert werden. Aufgrund der geschilderten "Historie" vieler Automatisierungsanordnungen fehlt aber oft eine präzise Ortsangabe des gesuchten Betriebsmittels. Daher kann lediglich mittels des Anlagenkennzeichnungssystems ein Fehler lokalisiert werden. Schlimmstenfalls müssten alle Komponenten und Betriebsmittel der Anlage im Zuge einer Begehung aufgesucht und hinsichtlich ihres Anlagenkennzeichens (AKZ) untersucht werden. Eine ähnliche Bestandsaufnahme ist auch dann notwendig, wenn eine Anlage umgebaut oder modernisiert werden soll, wobei nicht nur detaillierte funktionale Planungsdaten benötigt werden, sondern auch ein möglichst realitätsnahes räumliches Modell erforderlich ist.

Um eine solches räumliches Modell zu schaffen bzw. im Falle eines bereits existenten räumlichen Modells zu verifizieren, ist es häufig nötig, in der bereits geschilderten Weise eine "Begehung" der Anlage vorzunehmen, dabei die Betriebsmittel zu erfassen (idealer Weise durch Erfassung der Anlagenkennzeichen der einzelnen Betriebsmittel), und dabei zusammen mit einer "Ortsinformation" zu registrieren. Die dabei manuell gewonnenen Daten werden meist in eine Datenbank eingepflegt, wobei später aus den Informationen der Datenbank ein dreidimensionales Modell erstellt werden kann bzw. im Fehlerfall die Ortsinformation über ein gesuchtes Betriebsmittel ausgelesen werden kann. Bei der geschilderten Bestandsaufnahme einer Anlage können natürlich technische Hilfsmittel wie beispielsweise Kameras eingesetzt werden, wobei dann auf den Fotographien die Anlagenkennzeichen ausgelesen werden können und die Position der betreffenden Betriebsmittel zumindest abgeschätzt werden können.

Die Veröffentlichung EP 0 841 535 A2 - Weide et al. "Verfahren und Vorrichtung zur Flächen- und Raumvermessung" zeigt den Einsatz eines Laser-Entfernungsmessers zur räumlichen Vermessung der Lage von Objekten für einen räumlichen Lageplan.

Es ist eine Aufgabe der vorliegenden Erfindung, die Dokumentation von Automatisierungsanordnungen und insbesondere die ortsbezogene Erfassung von Betriebsmitteln zu vereinfachen.

Es ist eine Kernidee der erfindungsgemäßen Lösung dieser Aufgabe, dass zur detaillierten Dokumentation von solchen automatisierungstechnischen Anlagen 3D-Laserscanner einzusetzen, wobei durch einen 3D-Laserscanner von mehreren Positionen aus jeweils eine Vielzahl von Messpunkten aufgezeichnet wird, wobei die Messpunkte, die von verschiedenen Positionen aus aufgenommen wurden, zu einer Gesamtsicht zusammengestellt werden sollen. Durch die Kombination der Messpunkte, die von verschiedenen Positionen aus registriert wurden, können auch solche Betriebsmittel erfasst werden, die von einer einzigen Position aus nicht vollständig "gescannt" werden können, beispielsweise wegen Abschattungen und dgl. Zur erfindungsgemäßen Lösung gehört, dass die Betriebsmittel mit solchen Markierungen ausgerüstet sind, die in dem durch die 3D-Laserscanner erzeugten Gesamtbild automatisch identifiziert und ausgewertet werden können. Ein wesentlicher Vorteil besteht darin, dass die 3D-Laserscanner im Gegensatz zu optischen Kameras für jeden Messpunkt bzw. Bildpunkt eine Entfernungsinformation zwischen dem 3D-Laserscanner und dem registrierten Objekt liefern, wodurch sich im Zusammenhang mit einer bekannten Position des 3D-Laserscanners zum Zeitpunkt der Erfassung des betreffenden Messpunktes eine absolute Ortsinformation des Messpunktes und damit des betreffenden Betriebsmittels ergibt.

Die Aufgabe wird insbesondere durch ein Verfahren gemäß dem Patentanspruch 1 und durch eine Einrichtung gemäß dem Patentanspruch 5 gelöst.

Dabei wird ein Verfahren zur Bestimmung der Position von Betriebsmitteln einer industriellen Automatisierungsanordnung, insbesondere einer Verfahrenstechnischen Anlage, vorgeschlagen, wobei die Betriebsmittel als datentechnische Objekte in einer Datenbank, insbesondere einem Planungswerkzeug, registriert sind, und wobei die Koordinaten der Betriebsmittel jeweils den entsprechenden Objekten der Datenbank zugeordnet und gespeichert werden. Dabei werden in einem ersten Schritt die Betriebsmittel mit maschinenlesbaren optischen Markierungen versehen, wobei die optischen Markierungen jeweils ein Identifizierungsmerkmal für das jeweilige Betriebsmittel aufweisen, wobei in einem zweiten Schritt mittels eines 3D-Laserscanners an zumindest zwei verschiedenen Positionen der Automatisierungsanordnung jeweils eine Vielzahl von Messpunkten mit Abstandswerten des 3D-Laserscanners zu reflektierenden Oberflächen erfasst wird, wobei für jeden Messpunkt ein relativer Positionswert der reflektierenden Oberfläche zu der jeweiligen Position des Laserscanners und ein Reflexionswert für den erfassten Punkt der Oberfläche erfasst und wobei aus der jeweiligen Position des 3D-Laserscanners und dem relativen Positionswert ein absoluter Positionswert des erfassten Punktes der Oberfläche errechnet und zusammen mit dem jeweils erfassten Reflexionswert als Messpunkt gespeichert wird, wobei in einem dritten Schritt aus den an den zumindest zwei Positionen der Automatisierungsanordnung gespeicherten Messpunkten ein Gesamtbild erzeugt wird, und wobei in einem vierten Schritt in dem Gesamtbild die optischen Markierungen gesucht und danach ausgewertet werden, wobei die Identifizierungsmerkmale aus den aufgefundenen optischen Markierungen jeweils extrahiert und mit einem absoluten Positionswert der optischen Markierungen jeweils verknüpft werden, und wobei in einem fünften Schritt die absoluten Positionswerte mittels der verknüpften Identifizierungsmerkmale den datentechnischen Objekten der jeweiligen Betriebsmittel zugeordnet werden. Durch dieses Verfahren ist es möglich, automatisch eine dreidimensionale Dokumentation der in einer Automatisierungsanordnung verbauten Betriebsmittel bzw. Komponenten vorzunehmen und einem Planungswerkzeug bereitzustellen.

Die Lösung der Aufgabe sieht außerdem eine Einrichtung zur Bestimmung der Position von Betriebsmitteln einer industriellen Automatisierungsanordnung, insbesondere einer verfahrenstechnischen Anlage, vor, mit einem mobilen 3D-Laserscanner zur Erfassung von Abstandswerten des 3D-Laserscanners zu Oberflächen, und mit einer Auswerteeinrichtung zur Verarbeitung der erfassten Abstandswerte. Dabei sind die Betriebsmittel mit maschinenlesbaren optischen Markierungen mit Identifizierungsmerkmalen versehen, wobei die Einrichtung zur Durchführung des zweiten bis fünften Schrittes des zuvor diskutierten Verfahrens eingerichtet ist. Mit einer solchen Einrichtung lassen sich die bereits zuvor diskutierten Vorteile realisieren.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für die erfindungsgemäße Einrichtung. Die vorteilhaften Ausgestaltungen sind sowohl einzeln, als auch in Kombination miteinander realisierbar.

Vorteilhaft werden mittels des 3D-Laserscanners mit den Abstandswerten auch horizontale und vertikale Winkel jeweils erfasst, so dass ausgehend von der Position des 3D-Laserscanners jedem erfassten Messpunkt präzise Polarkoordinaten bzw. daraus abgeleitete kartesische Koordinaten zugeordnet werden können. Durch eine vorteilhafte Kombination der dabei gewonnenen räumlichen Werte (Koordinaten) mit einer Positionsangabe des 3D-Laserscanners bei der Erfassung der jeweiligen Messpunkte ist es möglich, ein mittels der jeweiligen Messpunkte erfasstes Betriebsmittel in einer Datenbank mit absoluten Koordinaten (Ortsinformationen, Lageinformationen) zu versehen. Diese Ortsinformationen können sich entweder auf einen definierten Referenzpunkt der Automatisierungsanordnung bzw. verfahrenstechnischen Anlage beziehen - dann sind das prinzipiell relative Ortsinformationen -, oder aber es können sich absolute Ortsinformationen ergeben, insbesondere dann, wenn die jeweilige Position des 3D-Laserscanners mittels eines GPS-Empfängers oder dgl. "absolut" bestimmt wird.

Vorteilhaft wird von dem 3D-Laserscanner bzw. von der Position des 3D-Laserscanners ausgehend nicht nur eine Vielzahl von Entfernungsbestimmungen vorgenommen, sondern auch zumindest ein Foto von zumindest einem Teil der erfassten Anlage oder von dem Betriebsmittel erstellt. Das dabei erzeugte Foto kann dann vorteilhaft mit den gewonnenen Ortsinformationen und mit Angaben über das jeweils identifizierte Betriebsmittel versehen werden, was Vorteile bei der weiteren Planung bzw. Bearbeitung der erfassten Anlage bringt.

Vorteilhaft werden die verwendeten optischen Markierungen derart ausgestaltet und angeordnet, dass diese bezogen auf eine Abtastungsdichte des 3D-Lasersscanners von einer für die Auswertung der Identifizierungsmerkmale ausreichenden Anzahl von Messpunkten erfasst werden. Konkret bedeutet dies, dass beispielsweise bei der Verwendung von Barcodes oder QR-Codes das Nyquist-Kriterium eingehalten wird, also ein derart aufgelöstes Bild erzeugt wird, dass eine Umsetzung des optischen Bildes in die mit dem Identifizierungsmerkmal codierten Daten möglich ist.

Vorteilhaft umfassen die Markierungen noch weitere optische Elemente, die beispielsweise das Auslesen einer Ausrichtung, Neigung oder dgl. gestatten. In einer weiteren vorteilhaften Ausgestaltung bestehen die Markierungen aus einem Material, welches sich hinsichtlich seiner Reflexionsfähigkeit signifikant von den übrigen Oberflächen der Anlage und der Betriebsmittel unterscheidet, so dass in dem erzeugten Bild die Markierungen besonders einfach aufgefunden werden können. Zusätzlich oder alternativ können die Markierungen auch eindeutige graphische Muster umfassen, die durch einen Suchalgorithmus besonders gut in der sich aus der Kombination aller erfassten Messpunkte erzeugten Gesamtansicht auffinden lassen.

Ein Ausführungsbeispiel des erfindungsgemäßen Verfahrens wird nachfolgend anhand der Zeichnungen erläutert. Es dient gleichzeitig der Erläuterung einer erfindungsgemäßen Einrichtung.

Dabei zeigen:
- Figur 1: in schematischer Darstellung einen Teil einer industriellen Automatisierungsanordnung, wobei verschiedene Betriebsmittel mit Markierungen versehen sind, und wobei mittels eines 3D-Laserscanners von zwei verschiedenen Positionen ausgehend die Oberflächen der Betriebsmittel abgetastet werden,
- Figur 2: ein Bespiel für eine maschinenlesbare optische Markierung, und
- Figur 3: ein Planungsbild in einem Planungswerkzeug einer industriellen Automatisierungsanordnung, bei dem die ermittelten Ortsinformationen abgerufen werden können.

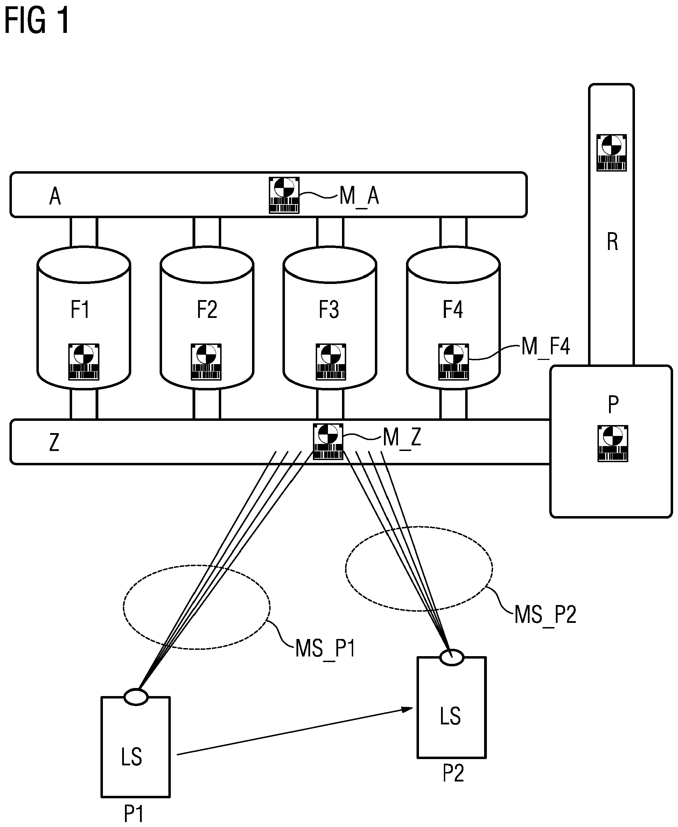

In der Figur 1 ist ein Ausschnitt einer industriellen Automatisierungsanordnung bzw. einer verfahrenstechnischen Anlage gezeigt. Die Darstellung in der Figur 1 ist dabei stark vereinfacht; die dargestellten Betriebsmittel weisen in der Realität eine Vielzahl von Oberflächen mit Schattierungen, Texturen und Details auf. Exemplarisch zeigt der Ausschnitt der Automatisierungsanordnung verschiedene tonnenförmige Filtereinrichtungen F1, ..., F4, die über einen Zulauf Z mit einer Pumpe P verbunden sind, wobei die Pumpe P wiederum an einer Verrohrung R angeflanscht ist. Ausgangsseitig sind die Filter F1, ..., F4 mit einem rohrförmigen Ablauf A verbunden. Die Filter F1, ..., F4, die Pumpe P und die Rohrleitungen A, Z, R sollen in diesem Beispiel als zu identifizierende und zu ortende Betriebsmittel gelten. Jedes dieser Betriebsmittel ist mit einem einer maschinenlesbaren optischen Markierung M versehen, wobei in der Figur 1 exemplarisch die Markierungen M_F4 (Markierung für Filter F4), M_A (Markierung des Rohrs A) und M_Z (Markierung des Zulaufs Z) mit Bezugszeichen versehen sind.

In der Figur 1 ist weiter ein 3D-Laserscanner LS dargestellt, welcher nacheinander von den Positionen P1 und P2 jeweils seine Umgebung abtastet ("scannt"), wobei jeweils ein in einer Abfolge von Messtrahlen MS_P1 (Messungen, die an der Position P1 vorgenommen wurden) und MS_P2 (Messungen an der Position P2) ausgestrahlt werden. Stark vereinfacht sind in der Figur 1 für jeden Standort nur vier Messungen zur Erfassung von vier Messpunkten auf der Oberfläche des Zulaufs Z gezeigt; in der Realität ist die Dichte der Messstrahlen und damit auch der Messpunkte derart hoch, dass aus den Messpunkten ein Bild mit einer vergleichsweisen hohen Auflösung zusammengestellt werden kann. Diese Auflösung ist so hoch, dass bei den mit den Messpunkten abgetasteten Markierungen M_Z, ..., M_A eine in den Markierungen jeweils codierte Information decodiert werden kann. Die von den Messungen an den Positionen P1 und P2 in Summe gewonnenen Messpunkte werden zu einem "Gesamtbild" zusammengestellt, so dass auch solche Bereiche der Betriebsmittel und der Markierungen, die bei einer einzelnen, "Aufnahme" abgeschattet sind (von anderen Betriebsmitteln beispielsweise verdeckt werden), in der Gesamtsicht sichtbar sind.

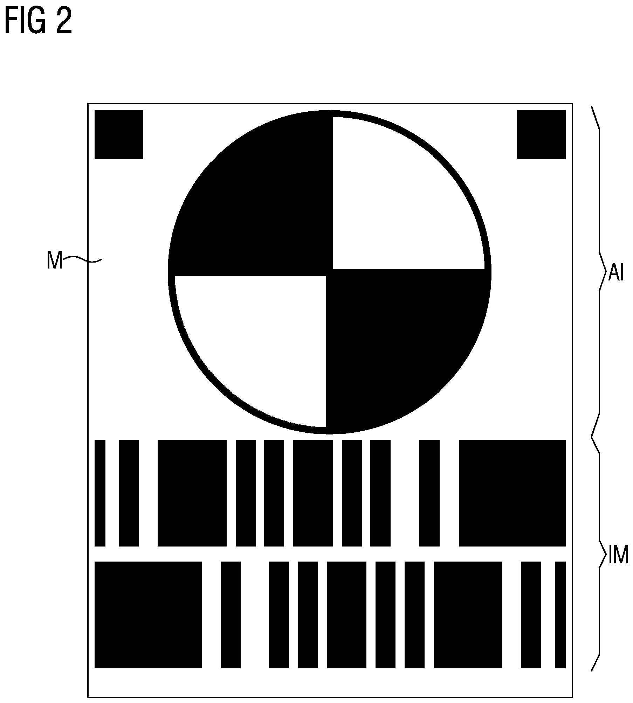

In der Figur 2 ist eine Markierung M, mit der die bereits beschriebenen Betriebsmittel gekennzeichnet sind, vergrößert dargestellt. In einer Engineering-Datenbank eines Automatisierungssystems oder einer Prozessautomatisierungs-Anlage hat jedes Betriebsmittel eine Identifizierung, beispielsweise eine Seriennummer oder dgl. Diese Identifizierung wird auch als Anlagenkennzeichen (AKZ) bezeichnet und ist zumindest innerhalb einer Projektierung bzw. einer Automatisierungsanordnung stets für jedes Betriebsmittel eindeutig. Die realen Betriebsmittel sind regelmäßig mit einem solchen Anlagenkennzeichen, also einer alphanumerischen Zeichenfolge, beschriftet. Solche Beschriftungen sind in Bildern (Fotos oder dgl.) nur unter optimalen Voraussetzungen zuverlässig maschinell auslesbar. In den hier benutzten Markierungen M wird ein eindeutiges Identifizierungsmerkmal IM für jedes Betriebsmittel in jeder Markierung M verwendet, wobei im vorliegenden Ausführungsbeispiel das Identifizierungsmerkmal als Strichcode (Barcode) dargestellt ist; selbstverständlich sind auch andere optische Markierungen, insbesondere QR-Codes (Quick-Response-Codes) und dgl. für eine maschinelle Auswertung gut geeignet. Die Markierung M umfasst weiterhin eine Reihe von Elementen (in der Figur 2 im oberen Teil dargestellt), die im Folgenden auch als Ausrichtungsinformationen AI bezeichnet werden sollen. Der dabei dargestellte Kreis wird zur Mustererkennung der Markierung M, die auch als "AKZ-Target" bezeichnet werden kann, in der sog. "Punktwolke" verwendet. Die Punktwolke ist die Summe von Messpunkten, die sich in der Gesamtsicht ergibt, die wiederum aus den Messpunkten gewonnen ist, die an den Positionen P1 und P2 erfasst wurden. Durch das in dem Kreis dargestellte Zielkreuz und die Schwarz-Weiß-Darstellung kann nicht nur das "AKZ-Target" (die Markierung M) in dieser Punktwolke leicht aufgefunden werden, sondern es kann auch noch dessen Lage bzw. Ausrichtung durch eine Analysesoftware errechnet werden. Dabei festgestellte Verzerrungen lassen auch noch Rückschlüsse auf einen Winkel zwischen dem (im Allgemeinen planaren) "AKZ-Target" und den jeweiligen Messstrahlen MS_P1, MS_P2 zu. Während im vorliegenden Ausführungsbeispiel davon ausgegangen wird, dass im Teil für die Identifizierungsmerkmale IM das in den Planungsunterlagen verwendete Anlagenkennzeichen AKZ vollständig codiert ist, können auch verkürzte Informationen codiert sein, welche dann über eine Konkordanzliste oder eine ähnliche Datenbank in die seitens eines Planungswerkzeugs tatsächlich verwendeten Anlagenkennzeichen umgesetzt werden.

Die in der Figur 2 exemplarisch dargestellt Markierung M kann in Abhängigkeit der zu erwartenden Abstände zwischen dem 3D-Laserscanner LS unterschiedlich groß gewählt werden; bei einem handelsüblichen 3D-Laserscanner und einen Abstand von ungefähr 100 Metern hat sich eine Markierung M in der Größe des DIN A4-Formats als ausreichend groß erwiesen.

Im Gegensatz zu einem gebräuchlichen Foto, welches für jeden Bildpunkt (Pixel) eine Farbinformation liefert (z.B. RGB-Format mit rotem, grünem und blauem Farbanteil) bzw. bei Schwarz-Weiß-Bildern einen entsprechenden Helligkeitswert, machen die Messpunkte bei einem 3D-Lasercanner vielmehr eine Aussage über die Reflexionsfähigkeit eines Objektes oder Gegenstandes an demjenigen Punkt, an dem der Messstrahl auftrifft und somit reflektiert wird. Im Ergebnis ergibt sich eine Aufnahme, die ähnlich wie ein Schwarz-Weiß-Bild aussieht, jedoch vollkommen unabhängig von einer externen Beleuchtung und dgl. ist. In einer vorteilhaften Ausgestaltung kann anstelle einer schwarz-weißen Markierung M ein Material verwendet werden, welches auf die Wellenlänge des eingesetzten Lasers abgestimmt ist. Dies bedeutet, dass in dem auszuwertenden "Gesamtbild" diejenigen Bildbereiche, die eine Markierung M umfassen, besonders gut ermittelt ("segmentiert") werden können.

Die einzelnen Messpunkte, die durch den 3D-Laserscanner LS ermittelt werden, umfassen neben der reinen "Bildinformation", also dem gemessenen Reflexionswert, jeweils Daten über die Entfernung des Messpunktes zu dem Laserscanner LS und Winkelinformationen über den horizontalen und vertikalen Winkel, mit dem der entsprechende Messstrahl von dem Laserscanner LS ausgesendet wurde. Zusammen mit den Koordinaten der Positionen P1, P2, an denen sich der Laserscanner LS bei der Registrierung des jeweiligen Messpunktes befunden hat, können für jeden Messpunkt absolute Koordinaten der damit abgetasteten Oberfläche und damit auch der jeweils abgetasteten Markierung M_Z, ..., M_A dem jeweiligen Messpunkt zugeordnet werden. Sobald das Identifizierungsmerkmal IM einer Markierung M decodiert ist, kann eine der Ortsinformationen, die einem der Messpunkte der Markierung M zugeordnet sind, mit dem Identifizierungsmerkmal IM und damit auch dem entsprechenden Anlagenkennzeichen AKZ verknüpft werden. Beispielsweise wird die Ortsinformation desjenigen Messpunktes verwendet, der in der Mitte des Kreises der Ausrichtungsinformation AI der Markierung M liegt. Nach der Decodierung aller in dem Gesamtbild aufgefundenen Markierungen M_Z, ..., M_A werden alle lokalisierten Anlagekennzeichen in einen verwendetes Anlagenplanungs-Werkzeug, Engineering-Tool oder dgl. übertragen.

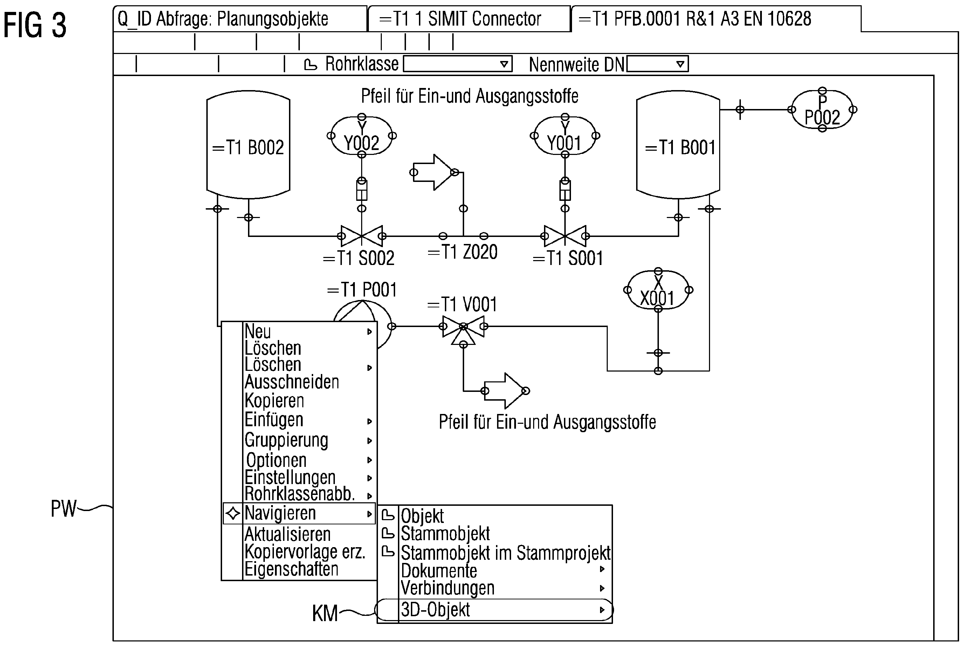

In der Figur 3 ist exemplarisch eine graphische Benutzeroberfläche eines solchen Planungswerkzeugs PW (Engineering-Tool) gezeigt. Die in der Figur 1 gegenständlich dargestellten Betriebsmittel sind in dem Planungswerkzeug PW durch Symbole visualisiert worden. Jedes dieser Symbole ist mit seinem Anlagenkennzeichen beschriftet. Mit einem in der Figur 3 exemplarisch dargestellten Kontextmenü KM kann in dem Planungswerkzeug PW ein Menüpunkt "3D-Objekt" eingeblendet werden, wobei ein Benutzer dann beispielsweise auswählen kann, ob er das entsprechende Betriebsmittel in einer fotorealistischen Ansicht sehen möchte, die aus dem Gesamtbild aller Messpunkte des 3D-Laserscanners gewonnen wurde, entnommen ist, oder ob er die absoluten oder relativen Koordinaten des entsprechenden Betriebsmittels angezeigt haben möchte.

Zusammengefasst können zur detaillierten Dokumentation von Anlagen moderne 3D-Laserscanner zum Einsatz kommen. Bei der 3D-Vermessung werden mehrere sog. 3D-Punktwolken erfasst. Jeder Messpunkt der 3D-Punktwolken setzt sich aus seinen Polarkoordinaten (Distanz, Horizontal- und Vertikalwinkel) und einem "Grauwert" zusammen. Der "Grauwert" ist ein Maß für die Reflektivität des entsprechenden Messpunktes. Darüber hinaus erfasst der 3D-Laserscanner zu jeder einzelnen 3D-Punktwolke auch seine eigene Position, also beispielsweise eine GPS-Koordinate, eine relative Höhe und eine Neigung. Nach der Vermessung einer Anlage von mehreren Standorten aus werden die im Einzelnen entstandenen 3D-Punktwolken zu einer gemeinsamen Punktwolke, der Gesamtsicht, verschmolzen. Diese Punktwolke, also die Gesamtsicht, wird mittels einer Auswertesoftware hinsichtlich enthaltener Markierungen, der sog. "AKZ-Targets" untersucht. Diese Markierungen können durch ihre eindeutige Gestaltung durch die Algorithmen einer Auswertesoftware zuverlässig identifiziert werden. Die aufgefundenen Markierungen werden hinsichtlich ihrer Nutzdaten-Information, die im Wesentlichen aus einem eindeutigen Identifizierungsmerkmal für das mit der Markierung gekennzeichnete Betriebsmittel besteht, ausgewertet, wobei diesem Identifizierungsmerkmal bzw. einem daraus abgeleiteten Anlagenkennzeichen die entsprechende Koordinate der Markierung zugeordnet wird. Somit ergibt sich eine automatische 3D-Dokumentation der in einer Anlage (Automatisierungsanordnung) verbauten Betriebsmittel bzw. Komponenten inklusive einer automatischen Übertragung der Koordinaten dieser Betriebsmittel oder Komponenten in ein Anlagen-Planungswerkzeug. Die gewonnenen Daten sind vielfach verwendbar, beispielweise für automatisierte Abgleiche zwischen einem Planungsstand und einer realen Anlage, einer Neu-Aufnahme einer bislang nicht dreidimensional dokumentierten Anlage etc. Zusätzlich können die Daten auch in einer realen Abbildung (Fotographie, Video) eingeblendet werden, die vorteilhaft im Zuge der 3D-Erfassung mittels des Laserscanners LS erstellt werden kann. Ebenfalls können bei dem 3D-Laserscan auch Oberflächeneigenschaften der Betriebsmittel erfasst werden, die beispielsweise auf mechanische Verformungen und Korrosion hinweisen können.

## Patentansprüche

1. Verfahren zur Bestimmung der Position (P1, P2) von Betriebsmitteln (A, F1 ...F4, R, P, Z) einer industriellen Automatisierungsanordnung, insbesondere einer verfahrenstechnischen Anlage,
wobei die Betriebsmittel (A, F1 ...F4, R, P, Z) als datentechnische Objekte in einer Datenbank, insbesondere einem Planungswerkzeug (PW), registriert sind, und
wobei die Koordinaten der Betriebsmittel (A, F1 ...F4, R, P, Z) jeweils den entsprechenden Objekten der Datenbank zugeordnet und gespeichert werden,
**dadurch gekennzeichnet,**
**dass** in einem ersten Schritt die Betriebsmittel (A, F1 ...F4, R, P, Z) mit maschinenlesbaren optischen Markierungen (M, M_A, M_F4, M_Z) versehen werden, wobei die optischen Markierungen (M, M_A, M_F4, M_Z) jeweils ein Identifizierungsmerkmal für das jeweilige Betriebsmittel (A, F1 ...F4, R, P, Z) aufweisen,
**dass** in einem zweiten Schritt mittels eines 3D-Laserscanners (LS) an zumindest zwei verschiedenen Positionen (P1, P2) der Automatisierungsanordnung jeweils eine Vielzahl von Messpunkten mit Abstandswerten des 3D-Laserscanners (LS) zu reflektierenden Oberflächen erfasst wird, wobei für jeden Messpunkt ein relativer Positionswert der reflektierenden Oberfläche zu der jeweiligen Position (P1, P2) des Laserscanners und ein Reflexionswert für den erfassten Punkt der Oberfläche erfasst und wobei aus der jeweiligen Position (P1, P2) des 3D-Laserscanners (LS) und dem relativen Positionswert ein absoluter Positionswert des erfassten Punktes der Oberfläche errechnet und zusammen mit dem jeweils erfassten Reflexionswert als Messpunkt gespeichert wird,
**dass** in einem dritten Schritt aus den an den zumindest zwei Positionen (P1, P2) der Automatisierungsanordnung gespeicherten Messpunkten ein Gesamtbild erzeugt wird,
**dass** in einem vierten Schritt in dem Gesamtbild die optischen Markierungen (M, M_A, M_F4, M_Z) gesucht und danach ausgewertet werden, wobei die Identifizierungsmerkmale aus den aufgefundenen optischen Markierungen (M, M_A, M_F4, M_Z) jeweils extrahiert und mit einem absoluten Positionswert der optischen Markierungen (M, M_A, M_F4, M_Z) jeweils verknüpft werden, und
**dass** in einem fünften Schritt die absoluten Positionswerte mittels der verknüpften Identifizierungsmerkmale den datentechnischen Objekten der jeweiligen Betriebsmittel (A, F1 ...F4, R, P, Z) zugeordnet werden.

2. Verfahren nach Patentanspruch 1,
**dadurch gekennzeichnet,**
**dass** mit den Abstandswerten horizontale und vertikale Winkel erfasst werden.

3. Verfahren nach Patentanspruch 1,
**dadurch gekennzeichnet,**
**dass** im Zuge der Erfassung der Abstandswerte an jeder Position (P1, P2) des 3D-Laserscanners (LS) in der Automatisierungsanordnung zusätzlich zumindest ein Foto von zumindest einem Teil des Erfassungsbereichs des 3D-Laserscanners (LS) aufgezeichnet wird, wobei nach der Positionsbestimmung der Betriebsmittel (A, F1 ...F4, R, P, Z) zumindest auszugsweise die Daten der datentechnischen Objekte an den entsprechenden Positionen (P1, P2) des Fotos mittels einer überlagernden Darstellung angezeigt werden.

4. Verfahren nach einem der Patentansprüche 1 bis 3,
**dadurch gekennzeichnet,**
**dass** die optischen Markierungen (M, M_A, M_F4, M_Z) derart ausgestaltet und angeordnet werden, dass diese bezogen auf eine Abtastungsdichte des 3D-Laserscanners (LS) von einer für die Auswertung der Identifizierungsmerkmale ausreichenden Anzahl von Messpunkten erfasst werden.

5. Einrichtung zur Bestimmung der Position (P1, P2) von Betriebsmitteln (A, F1 ...F4, R, P, Z) einer industriellen Automatisierungsanordnung, insbesondere einer verfahrenstechnischen Anlage,
mit einem mobilen 3D-Laserscanner (LS) zur Erfassung von Abstandswerten des 3D-Laserscanners (LS) zu Oberflächen, und mit einer Auswerteeinrichtung zur Verarbeitung der erfassten Abstandswerte,
**dadurch gekennzeichnet,**
**dass** die Betriebsmittel (A, F1 ...F4, R, P, Z) mit maschinenlesbaren optischen Markierungen (M, M_A, M_F4, M_Z) mit Identifizierungsmerkmalen versehen sind, und
**dass** die Einrichtung zur Durchführung des zweiten bis fünften Schrittes des in Patentanspruch 1 beschriebenen Verfahrens eingerichtet ist.

## Claims

1. Method for determining the position (P1, P2) of operating resources (A, F1 ...F4, R, P, Z) of an industrial automation arrangement, in particular a process engineering installation, the operating resources (A, F1 ...F4, R, P, Z) being recorded as data objects in a database, in particular a planning tool (PW), and
the coordinates of the operating resources (A, F1 ...F4, R, P, Z) each being assigned to the corresponding objects in the database and being stored,
**characterized**
**in that**, in a first step, the operating resources (A, F1 ...F4, R, P, Z) are provided with machine-readable optical marks (M, M_A, M_F4, M_Z), the optical marks (M, M_A, M_F4, M_Z) each having an identification feature for the respective operating resource (A, F1 ...F4, R, P, Z),
**in that**, in a second step, a 3-D laser scanner (LS) is respectively used to capture a multiplicity of measuring points with distance values of the 3-D laser scanner (LS) with respect to reflective surfaces at at least two different positions (P1, P2) of the automation arrangement, a relative position value of the reflective surface with respect to the respective position (P1, P2) of the laser scanner and a reflection value for the captured point of the surface being captured for each measuring point, and an absolute position value of the captured point of the surface being calculated from the respective position (P1, P2) of the 3-D laser scanner (LS) and the relative position value and being stored together with the respectively captured reflection value as a measuring point,
**in that**, in a third step, an overall image is produced from the measuring points stored at the at least two positions (P1, P2) of the automation arrangement,
**in that**, in a fourth step, the optical marks (M, M_A, M_F4, M_Z) are searched for in the overall image and are then evaluated, the identification features each being extracted from the optical marks (M, M_A, M_F4, M_Z) found and each being linked to an absolute position value of the optical marks (M, M_A, M_F4, M_Z), and
**in that**, in a fifth step, the absolute position values are assigned to the data objects of the respective operating resources (A, F1 ...F4, R, P, Z) using the linked identification features.

2. Method according to Patent Claim 1,
**characterized**
**in that** horizontal and vertical angles are captured with the distance values.

3. Method according to Patent Claim 1,
**characterized**
**in that**, when capturing the distance values at each position (P1, P2) of the 3-D laser scanner (LS) in the automation arrangement, at least one photo of at least one part of the capture range of the 3-D laser scanner (LS) is additionally recorded, the data relating to the data objects being displayed, at least in parts, at the corresponding positions (P1, P2) of the photo by means of an overlaying representation after determining the position of the operating resources (A, F1 ...F4, R, P, Z).

4. Method according to one of Patent Claims 1 to 3, **characterized**
**in that** the optical marks (M, M_A, M_F4, M_Z) are configured and arranged in such a manner that they are captured from a number of measuring points sufficient for evaluating the identification features, based on a sampling density of the 3-D laser scanner (LS).

5. Device for determining the position (P1, P2) of operating resources (A, F1 ...F4, R, P, Z) of an industrial automation arrangement, in particular a process engineering installation, having a mobile 3-D laser scanner (LS) for capturing distance values of the 3-D laser scanner (LS) with respect to surfaces, and
having an evaluation device for processing the captured distance values,
**characterized**
**in that** the operating resources (A, F1 ...F4, R, P, Z) are provided with machine-readable optical marks (M, M_A, M_F4, M_Z) having identification features, and
**in that** the device is set up to carry out the second to fifth steps of the method described in Patent Claim 1.

## Revendications

1. Procédé de détermination de la position (P1, P2) de moyens (A, F1 ...F4, R, P, Z) de fonctionnement d'un agencement d'automatisation industrielle, notamment d'une installation en technique des procédés,
dans lequel on enregistre les moyens (A, F1 ...F4, R, P, Z) de fonctionnement sous la forme d'objets en technique de données dans une base de données, notamment dans un outil (PW) de conception et
dans lequel on associe les coordonnées des moyens (A, F1...F4, R, P, Z) de fonctionnement, respectivement aux objets correspondants de la base de données et on les mémorise,
**caractérisé**
**en ce que**, dans un premier stade, on munit les moyens (A, F1 ...F4, R, P, Z) de fonctionnement de repères (M, M_A, M_F4, M-Z) optiques déchiffrables par l'ordinateur, les repères (M, M_A, M_F4, M_Z) optiques ayant respectivement une caractéristique d'identification du moyen (A, F1...F4, R, P, Z) de fonctionnement respectif,
**en ce que**, dans un deuxième stade, au moyen d'un scanner (LS) laser en 3D, on détecte, en au moins deux positions (P1, P2) différentes de l'agencement d'automatisation, respectivement une pluralité de points de mesure ayant des valeurs de distance du scanner (LS) laser en 3D à des surfaces réfléchissantes, dans lequel, pour chaque point de mesure, on détecte une valeur de position relative des surfaces réfléchissantes par rapport à la position (P1, P2) respective du scanner laser et une valeur de réflexion pour le point détecté de la surface et dans lequel, à partir de la position (P1, P2) respective du scanner (LS) laser 3D et de la valeur de position relative, on calcule une valeur de position absolue du point détecté de la surface et, ensemble avec la valeur de réflexion détectée, on le mémorise comme point de mesure,
**en ce que**, dans un troisième stade, on produit une image globale à partir des points de mesure mémorisés en les au moins deux positions (P1, P2) de l'agencement d'automatisation,
**en ce que**, dans un quatrième stade, on recherche dans l'image globale les repères (M, M_A, M_F4, M_Z) optiques et ensuite on les exploite, les caractéristiques d'identification étant extraites des repères (M, M_A, M_F4, M_Z) optiques trouvés et étant combinées respectivement à une valeur de position absolue des repères (M, M_A, M_F4, M_Z) optiques et
**en ce que**, dans un cinquième stade, on associe les valeurs de position absolues au moyen des caractéristiques d'identification combinées aux objets en technique de données des moyens (A, F1...F4, R, P, Z) de fonctionnement respectifs.

2. Procédé suivant la revendication 1,
**caractérisé**
**en ce que** l'on détecte des angles horizontaux et verticaux par les valeurs de distance.

3. Procédé suivant la revendication 1,
**caractérisé**
**en ce que**, au cours de la détection des valeurs de distance, on enregistre, en chaque position (P1 P2) du scanner (LS) laser en 3D, dans l'agencement d'automatisation, en plus au moins une photographie d'au moins une partie de la région de détection du scanner (LS) laser en 3D, dans lequel, après la détermination de position des moyens (A, F1...F4, R, P, Z) de fonctionnement, on affiche, au moins par extrait, les données des objets en technique de données, en les positions (P1, P2) correspondantes de la photographie, au moyen d'une représentation à superposition.

4. Procédé suivant l'une des revendications 1 à 3, **caractérisé**
**en ce que** l'on conforme et l'on dispose les repères (M, M_A, M_F4, M_Z) optiques, de manière à les détecter rapportés à une densité d'échantillonnage du scanner (LS) laser en 3D, par un nombre de points de mesure suffisants pour l'exploitation des caractéristiques d'identification.

5. Dispositif de détermination de la position (P1, P2) de moyens (A, F1...F4, R, P, Z) de fonctionnement d'un agencement d'automatisation industrielle, notamment d'une installation en technique de procédés,
comprenant un scanner (LS) laser en 3D mobile, pour détecter des valeurs de distance du scanner (LS) laser en 3D à des surfaces et comprenant un dispositif d'exploitation, pour traiter des valeurs de distance détectées,
**caractérisé**
**en ce que** les moyens (A, F1...F4, R, P, Z) sont pourvus de repères (M, M_A, M_F4, M_Z) optiques déchiffrables par ordinateur et ayant des caractéristiques d'identification et
**en ce que** le dispositif est conçu pour effectuer les deuxième à cinquième stades du procédé décrit à la revendication 1.
